# FASCICULE DE BREVET EUROPEEN

(11) **EP 3 223 351 B1**
(45) Date de publication et mention de la délivrance du brevet: **19.12.2018**
(21) Numéro de dépôt: 17162335.8
(22) Date de dépôt: 22.03.2017
(51) Int. Cl.: H01M 8/0206, H01M 8/025, H01M 8/0265, H01M 8/0267, H01M 8/0254

(54) **PLAQUE BIPOLAIRE DE CELLULE ELECTROCHIMIQUE DE FAIBLE EPAISSEUR**
BIPOLARE PLATTE EINER ELEKTROCHEMISCHEN ZELLE GERINGER DICKE
BIPOLAR PLATE OF A THIN FUEL CELL

(30) Priorité: 24.03.2016 FR 1652543
(43) Date de publication de la demande: 27.09.2017
(73) Titulaire: COMMISSARIAT À L'ÉNERGIE ATOMIQUE ET AUX ÉNERGIES ALTERNATIVES, 75015 Paris (FR)
(72) Inventeur: POIROT-CROUVEZIER, Jean-Philippe, 38450 SAINT GEORGES DE COMMIERS (FR)
(74) Mandataire: GIE Innovation Competence Group

(56) Documents cités:
- JP-A- 2006 228 580
- JP-A- 2007 200 700
- US-A1- 2005 058 864
- US-A1- 2011 212 385

## Description

### DOMAINE TECHNIQUE

Le domaine de l'invention est celui des réacteurs électrochimiques comportant un empilement de cellules électrochimiques, telles que les piles à combustible et les électrolyseurs, et concerne plus particulièrement les plaques bipolaires, du type à tôles conductrices, situées entre les électrodes de cellules électrochimiques adjacentes.

### ÉTAT DE LA TECHNIQUE ANTÉRIEURE

Un réacteur électrochimique, tel qu'une pile à combustible ou un électrolyseur, comporte habituellement un empilement de cellules électrochimiques dont chacune comprend une anode et une cathode séparées électriquement l'une de l'autre par un électrolyte, les cellules étant le lieu d'une réaction électrochimique entre deux réactifs introduits de manière continue.

D'une manière générale, dans le cas d'une pile à combustible, le combustible (par exemple l'hydrogène) est apporté jusqu'à l'anode alors que le comburant (par exemple l'oxygène) est amené à la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les réactifs doivent y être apportés, les produits et les espèces non réactives doivent en être évacués, tout comme la chaleur produite lors de la réaction.

Les cellules électrochimiques sont habituellement séparées les unes des autres par des plaques bipolaires qui assurent l'interconnexion électrique des cellules. Les plaques bipolaires comportent habituellement une face anodique au niveau de laquelle est formé un circuit de distribution du carburant, et une face cathodique, opposée à la face anodique, au niveau de laquelle est formé un circuit de distribution du comburant. Chaque circuit de distribution prend la forme d'un réseau de canaux agencés par exemple en parallèle ou en présentant des ondulations, ou décalages transversaux, dans le plan (X,Y) de la plaque bipolaire, pour amener l'espèce réactive de manière homogène à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite localement lors de la réaction par la cellule.

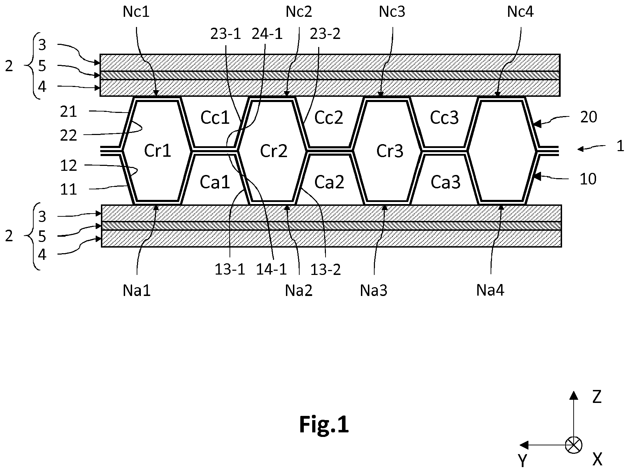

La figure 1 (mode de réalisation non conforme à l'invention) est une vue partielle et schématique, en coupe transversale, de cellules électrochimiques adjacentes où des assemblages membrane/électrodes 2 voisins sont séparés l'un de l'autre par une plaque bipolaire 1. La plaque bipolaire 1 est ici formée de deux tôles 10, 20 électriquement conductrices accolées l'une à l'autre suivant la direction d'empilement des cellules électrochimiques. Elles présentent des reliefs, ou bossages, formant à la fois les canaux Ca, Cc des circuits de distribution sur les faces externes 11, 21 des tôles, et les canaux Cr du circuit de refroidissement entre les faces internes 12, 22 des tôles. Les tôles conductrices 10, 20 peuvent être réalisées en métal et les reliefs être formés par emboutissage.

Les canaux de distribution Cal, Ca2 d'une première tôle conductrice 10 sont superposés à ceux Ccl, Cc2 de la deuxième tôle conductrice opposée 20, de sorte que chaque canal de distribution Cal, Ca2 d'une tôle conductrice est en contact d'un canal de distribution Ccl, Cc2 de la tôle conductrice opposée au niveau de leurs parois de fond de canal 14-1, 14-2, 24-1, 24-2 respectives. De plus, les canaux de refroidissement Cr sont adjacents aux canaux de distribution Ca, Cc dans un plan parallèle au plan (X,Y) de la plaque bipolaire 1. Plus précisément, un canal de refroidissement Cr2 est délimité transversalement par les parois latérales 13-1, 23-1, 13-2, 23-2 des canaux de distribution Cal, Ccl, Ca2, Cc2 et par les nervures Na2, Nc2 qui séparent entre eux les canaux de distribution d'une même tôle conductrice.

Le document US2011/212385 décrit un séparateur de pile à combustible qui comporte deux plaques accolées l'une à l'autre. Chaque plaque présente des projections venant au contact de l'autre plaque, les projections étant agencées mutuellement de manière à former des canaux d'écoulement de gaz réactifs et des canaux d'écoulement d'un fluide de refroidissement.

Il existe cependant un besoin de disposer de plaques bipolaires à tôles conductrices présentant une épaisseur moindre, tout en permettant un bon écoulement des fluides de distribution et de refroidissement dans les canaux respectifs.

### EXPOSÉ DE L'INVENTION

L'invention a pour objectif de proposer une plaque bipolaire de cellule électrochimique à tôles conductrices, présentant une faible épaisseur tout en permettant un bon écoulement des fluides de distribution et de refroidissement. Pour cela, l'objet de l'invention est une plaque bipolaire destinée à être disposée entre deux électrodes de cellules électrochimiques adjacentes, comportant une première et une deuxième tôles conductrices ayant chacune une face interne et une face externe, les tôles conductrices étant accolées l'une à l'autre au niveau des faces internes, et comportant chacune des reliefs délimitant au moins partiellement,
- au niveau des faces externes, des canaux de distribution destinés à distribuer des gaz réactifs, les canaux de distribution d'une même tôle conductrice étant séparés deux à deux par une nervure de séparation destinée à être au contact de l'une desdites électrodes, et
- au niveau des faces internes, des canaux de refroidissement destinés à permettre l'écoulement d'un fluide caloporteur.

Selon l'invention, chacun desdits canaux de distribution est situé en regard d'une nervure de séparation de la tôle conductrice opposée ; et lesdits canaux de distribution comportent des portions de différentes profondeurs agencées de manière à former une alternance longitudinale entre :
- une première zone, dite à distribution privilégiée, dans laquelle :
   o les canaux de distribution présentent une section transversale cumulée d'une première valeur dite valeur haute de distribution, et
   o les canaux de refroidissement présentent une section transversale cumulée d'une première valeur dite valeur basse de refroidissement ; et
- une deuxième zone, dite à refroidissement privilégié, dans laquelle :
   o les canaux de distribution présentent une section transversale cumulée d'une valeur inférieure à la valeur haute de distribution, et
   o les canaux de refroidissement présentent une section transversale cumulée d'une valeur supérieure à la valeur basse de refroidissement.

Certains aspects préférés mais non limitatifs de cette plaque bipolaire sont les suivants :
Des canaux de distribution peuvent présenter, dans les zones à distribution privilégiée, une portion à profondeur dite nominale ; et, dans les zones à refroidissement privilégié, une portion à profondeur dite réduite inférieure à la profondeur nominale.

Chaque canal de distribution peut comporter une paroi de fond reliée aux nervures de séparation adjacentes, les portions à profondeur nominale étant en contact mécanique avec les nervures de séparation opposées par leur paroi de fond.

Dans les zones à distribution privilégiée, des canaux de distribution peuvent présentent une portion à profondeur dite nominale, et d'autres canaux de distribution peuvent présenter une portion à profondeur dite réduite inférieure à la profondeur nominale.

Au moins un canal de refroidissement peut s'étendre, dans les zones à distribution privilégiée, entre la paroi de fond d'une portion à profondeur réduite d'un canal de distribution et une nervure de séparation opposée.

Dans les zones à distribution privilégiée, ledit canal de refroidissement peut être délimité transversalement par deux portions à profondeur nominale de canaux de distribution de la même tôle conductrice.

Un canal de distribution peut présenter une portion à profondeur réduite dans une première zone à distribution privilégiée, et une portion à profondeur nominale dans une deuxième zone à distribution privilégiée successive à la première zone.

Les canaux de refroidissement peuvent présenter, dans les zones à distribution privilégiée, une dimension transversale, dans le plan de la plaque bipolaire, d'une première valeur, et, dans les zones à refroidissement privilégié, une dimension transversale d'une valeur supérieure à ladite première valeur.

Dans au moins une zone à refroidissement privilégié, les canaux de refroidissement peuvent communiquer fluidiquement ensemble.

Les canaux de distribution d'une tôle conductrice destinée à contacter une cathode d'une cellule électrochimique peuvent présenter des portions à profondeur nominale dans les zones à distribution privilégiée.

L'invention porte également sur une cellule électrochimique, comportant :
- une plaque bipolaire selon l'une quelconque des caractéristiques précédentes ;
- un assemblage membrane/électrodes, dont l'une desdites électrodes est au contact de la première ou la deuxième tôle conductrice de la plaque bipolaire.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence, outre la figure 1 (mode de réalisation non conforme à l'invention) déjà décrite, aux dessins annexés sur lesquels :
Les figures 2A à 2C sont des vues en coupe transversale qui illustrent de manière schématique une plaque bipolaire selon un mode de réalisation, située entre deux assemblages membrane/électrodes voisins, où les fig.2A et 2C illustrent deux zones successives à distribution privilégiée, différentes l'une de l'autre, et où la fig.2B illustre une zone à refroidissement privilégié ;
la figure 3 est une vue en perspective et en éclaté d'une partie de la plaque bipolaire illustrée sur les fig.2A à 2C ;
les figures 4A à 4I sont des vues en coupe transversale de la partie de plaque bipolaire illustrée sur la figure 3, qui représentent une alternance longitudinale entre des zones à distribution privilégiée et des zones à refroidissement privilégié ;
Les figures 5A à 5C sont des vues en coupe transversale qui illustrent de manière schématique une plaque bipolaire selon un autre mode de réalisation, située entre deux assemblages membrane/électrodes voisins.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

On décrira différents modes de réalisation et variantes en référence à une pile à combustible, et en particulier à une pile à combustible de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques.

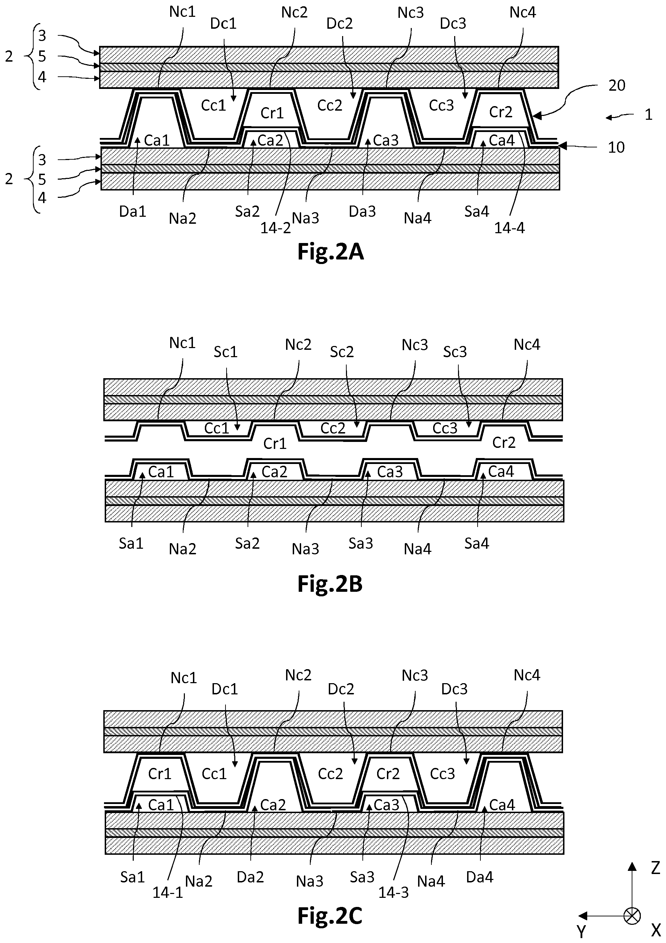

Les figures 2A à 2C illustrent de manière partielle et schématique, en coupe transversale, un exemple de plaque bipolaire 1 de cellule électrochimique selon un mode de réalisation. Les cellules électrochimiques appartiennent ici à un empilement de cellules d'une pile à combustible. Chaque cellule électrochimique comporte un assemblage membrane/électrodes 2 formé d'une anode 3 et d'une cathode 4 séparées l'une de l'autre par un électrolyte 5 comprenant ici une membrane polymère. Les assemblages membrane/électrodes 2 des cellules électrochimiques sont disposés entre des plaques bipolaires 1 adaptées à amener des espèces réactives aux électrodes et à évacuer la chaleur produite lors de la réaction électrochimique.

On définit ici et pour la suite de la description un repère orthonormé direct (X,Y,Z) où l'axe Z est orienté suivant l'axe d'empilement des cellules électrochimiques et suivant l'épaisseur de la plaque bipolaire, et où les axes X et Y définissent un plan parallèle au plan de la plaque bipolaire.

De manière connue en soi, chaque électrode 3, 4 comporte une couche de diffusion (GDL, pour *Gas Diffusion Layer,* en anglais), disposée au contact d'une plaque bipolaire 1, et une couche active située entre la membrane 5 et la couche de diffusion. Les couches actives sont le lieu des réactions électrochimiques. Elles comportent des matériaux permettant les réactions d'oxydation et de réduction aux interfaces respectives de l'anode et la cathode avec la membrane. Les couches de diffusion sont réalisées en matériau poreux autorisant la diffusion des espèces réactives à partir de circuit de distribution des plaques bipolaires 1 jusqu'aux couches actives, ainsi que la diffusion des produits issus de la réaction électrochimique jusqu'au même circuit de distribution.

Chaque plaque bipolaire 1 est formée de deux tôles conductrices 10, 20 accolées et assemblées l'une à l'autre, ces tôles conductrices étant embouties de manière à former des circuits de distribution de gaz réactifs au niveau des électrodes 3, 4 de chacune des cellules électrochimiques, et un circuit de refroidissement situé entre les tôles conductrices 10, 20. Ainsi, une première tôle conductrice 10, dite anodique, est destinée à être au contact de l'anode 3 d'un assemblage membrane/électrodes 2 d'une cellule électrochimique, alors que la deuxième tôle conductrice 20, dite cathodique, est destinée à être au contact de la cathode 4 d'un assemblage membrane/électrodes 2 d'une cellule électrochimique adjacente.

Comme l'illustre également la figure 1, chaque tôle conductrice 10, 20 comporte une face externe 11, 21 et une face interne 12, 22 opposée, les tôles conductrices 10, 20 étant accolées l'une à l'autre au niveau des faces internes 12, 22. Une face externe 11, 21 est dite anodique lorsqu'elle est destinée à être au contact de l'anode 3 d'une cellule électrochimique, ou cathodique lorsqu'elle est destinée à être au contact de la cathode 4 de la cellule électrochimique adjacente. La face anodique d'une tôle conductrice 10, 20 comporte le circuit de distribution d'un gaz réactif, par exemple de l'hydrogène, et la face cathodique de l'autre tôle conductrice comporte un circuit de distribution d'un gaz réactif, par exemple de l'air ou de l'oxygène.

Les tôles conductrices 10, 20 se présentent sous forme de feuilles, ou de plaques élémentaires de faible épaisseur, réalisées en un matériau électriquement conducteur, par exemple un métal voire un matériau composite par exemple chargé en graphite. L'épaisseur peut être de l'ordre de quelques dizaines de microns à quelques centaines de microns dans le cas des tôles métalliques, par exemple de 50µm à 200µm environ.

Chaque tôle conductrice comporte des reliefs, ou bossages, obtenus par exemple par emboutissage ou mis en forme sous presse, dont la forme sur une face est le complémentaire de la forme sur la face opposée. Ces reliefs forment, au niveau des faces externes 11, 21, les circuits de distribution de gaz réactifs, et, au niveau des faces internes 12, 22, un circuit de refroidissement comportant des canaux dans lesquels un fluide caloporteur est destiné à s'écouler.

Comme l'illustre également la figure 1, chaque canal de distribution Cal, Ccl est délimité par des parois latérales 13-1, 23-1 qui s'étendent sensiblement dans l'axe Z de l'épaisseur de la plaque bipolaire 1, les parois latérales 13-1, 23-1 de chaque canal étant reliées entre elles par une paroi de fond 14-1, 24-1. Chaque canal de distribution, par exemple le canal Ca2, est séparé des canaux voisins Cal, Ca3 du même circuit de distribution par une paroi dite nervure de séparation Na2, Na3 qui relie les parois latérales adjacentes de deux canaux de distribution adjacents, cette nervure de séparation étant destinée à venir au contact de l'électrode 3 correspondante. Ainsi, les canaux de distribution anodiques, resp. cathodiques, sont séparés deux à deux par une nervure de séparation anodique, resp. cathodique. La nervure de séparation est une paroi dont la surface peut être de préférence sensiblement plane.

On peut définir une profondeur locale de canal de distribution comme étant la dimension suivant l'axe Z entre la paroi de fond du canal et un plan passant par les nervures de séparation adjacentes. On peut également définir une largeur locale de nervure de séparation comme étant la dimension de la nervure dans une section transversale. Par ailleurs, par adjacent, ou adjacent transversalement, on entend juxtaposé suivant un axe transversal à l'axe longitudinal d'un canal considéré.

Selon l'invention, chaque canal de distribution est situé en regard d'une nervure de séparation de la tôle conductrice opposée. Par situé en regard, on entend que le canal est situé au droit de, c'est-à-dire à la perpendiculaire, d'une nervure de séparation suivant l'axe Z d'épaisseur de la plaque bipolaire. Plus précisément, la paroi de fond d'un canal de distribution d'une tôle conductrice est située au droit d'une nervure de séparation opposée suivant l'axe Z, et non pas au droit d'une paroi de fond d'un canal de distribution de la tôle conductrice opposée. Par ailleurs, par chaque canal de distribution, on entend une partie ou la totalité des canaux de distribution d'un même réseau de distribution. Enfin, chaque canal de distribution est situé en regard d'une nervure de séparation, sur une partie ou la totalité de sa longueur.

Ainsi, par cette disposition des canaux de distribution des deux tôles conductrices, la profondeur d'un canal de distribution n'est pas limitée par celle d'un canal de distribution de la tôle conductrice opposée comme dans l'exemple de l'art antérieur décrit précédemment. La profondeur des canaux de distribution peut donc varier suivant l'axe longitudinal entre une valeur nominale pour laquelle la paroi de fond est avantageusement en contact avec la nervure de séparation opposée, et une valeur dite réduite inférieure à la valeur nominale. En d'autres termes, chaque canal de distribution peut comporter des portions à profondeur nominale et des portions à profondeur réduite. Par profondeur nominale, on entend une profondeur assurant une section transversale d'écoulement permettant un écoulement optimal de fluide.

Dans cette configuration, la plaque bipolaire présente alors une épaisseur sensiblement diminuée par rapport à celle de la plaque bipolaire selon l'exemple de l'art antérieur décrit précédemment. En effet, l'épaisseur de la plaque bipolaire correspond ici sensiblement à la profondeur nominale d'un canal de distribution, moyennant les épaisseurs des tôles conductrices, alors que l'épaisseur de la plaque bipolaire dans l'exemple de la fig.1 correspond à la somme des profondeurs nominales d'un canal anodique et d'un canal cathodique superposés l'un à l'autre.

De plus, dans le but d'assurer en outre un bon écoulement des gaz réactifs et du fluide caloporteur, les canaux de distribution comportent des portions de différentes profondeurs, ces portions étant agencées de manière à former une alternance longitudinale entre :
- une première zone, dite à distribution privilégiée, dans laquelle :
   o les canaux de distribution Ca, Cc présentent une section transversale cumulée d'une première valeur dite valeur haute de distribution, et
   o les canaux de refroidissement Cr présentent une section transversale cumulée d'une première valeur dite valeur basse de refroidissement ; et
- une deuxième zone, dite à refroidissement privilégié, dans laquelle :
   o les canaux de distribution présentent une section transversale cumulée d'une valeur, dite valeur basse de distribution, inférieure à la valeur haute de distribution, et
   o les canaux de refroidissement présentent une section transversale cumulée d'une valeur, dite valeur haute de refroidissement, supérieure à la valeur basse de refroidissement.

Par section transversale cumulée, ou section d'écoulement cumulée, on entend la somme des sections de passage du fluide dans les canaux considérés, dans un plan transversal à l'axe longitudinal des canaux. Il peut s'agir d'une section d'écoulement cumulée relative aux gaz réactifs ou relative au fluide caloporteur. La valeur haute de distribution est de préférence supérieure à la valeur basse de refroidissement, et une valeur basse de distribution est de préférence inférieure à une valeur haute de refroidissement.

Par ailleurs, par alterner, on entend que les différentes zones se succèdent tour à tour, de manière répétée, périodique ou non, suivant l'axe longitudinal des canaux.

Ainsi, on alterne, suivant un axe longitudinal des canaux, les zones où la distribution des gaz réactifs est privilégiée et les zones où le refroidissement par l'écoulement du fluide caloporteur est privilégié. En particulier, la section d'écoulement cumulée des canaux de distribution dans les zones à distribution privilégiée est supérieure à la valeur qu'elle présente dans la zone à refroidissement privilégié, ce qui se traduit par une perte de charge locale diminuée dans les canaux de distribution au niveau des zones à distribution privilégiée, ce qui améliore l'écoulement local des gaz réactifs. Par ailleurs, la section d'écoulement des canaux de refroidissement dans la zone à refroidissement privilégié est supérieure à la valeur qu'elle présente dans la zone à distribution privilégiée, ce qui se traduit par une perte de charge locale diminuée dans les canaux de refroidissement au niveau des zones à refroidissement privilégié, ce qui améliore l'écoulement local du fluide caloporteur.

La figure 2A représente une section transversale de la plaque bipolaire 1 dans la première zone dite à distribution privilégiée. Dans cet exemple, les canaux cathodiques Ccl, Cc2, Cc3 de distribution présentent une portion Dcl, Dc2, Dc3 à profondeur dite nominale. La profondeur nominale des canaux cathodiques est telle que la paroi de fond des canaux cathodiques Ccl, Cc2, Cc3 est en contact mécanique avec la nervure anodique Na2, Na3, Na4 correspondante. Ici chaque canal cathodique présente une profondeur nominale, de sorte que deux canaux cathodiques voisins, c'est-à-dire directement adjacents et séparés par une nervure de séparation, présentent une profondeur nominale. En variante, les canaux cathodiques peuvent ne pas tous présenter une profondeur de même valeur.

Les canaux anodiques de distribution présentent une portion à profondeur nominale pour certains d'entre eux, ici le canal anodique Cal, Ca3, et une portion à profondeur dite réduite, inférieure à la profondeur nominale, pour d'autres, ici les canaux Ca2, Ca4. Dans cet exemple, les portions Dal, Da3 à profondeur nominale des canaux anodiques sont telles que la paroi de fond des canaux Ca1, Ca3 est en contact mécanique avec la nervure cathodique Nc1, Nc3 correspondante. La portion Sa2, Sa4 à profondeur réduite des canaux Ca2, Ca4 est telle que la paroi de fond correspondante n'est pas en contact avec la nervure cathodique Nc2, Nc4 en regard, mais elle autorise cependant l'écoulement de gaz réactifs.

Les canaux de refroidissement sont situés entre deux canaux de distribution d'une même tôle conductrice dont la profondeur est nominale, et sont superposés à des canaux de distribution de la tôle conductrice opposée dont la profondeur est réduite. Ainsi, le canal de refroidissement Cr1 est superposé à la portion Sa2 du canal anodique Ca2 et est bordé transversalement par les portions Dcl, Dc2 des canaux cathodiques Cc1 et Cc2. Il est donc délimité suivant l'axe Z par la paroi de fond du canal anodique Ca2 et par la nervure cathodique opposée Nc2, et suivant l'axe Y par les parois latérales des canaux cathodiques Cc1 et Cc2.

Cette configuration est dite à distribution privilégiée dans la mesure où la section d'écoulement cumulée des canaux de distribution cathodiques et anodiques présente une première valeur haute de distribution. En effet, plusieurs canaux de distribution présentent une profondeur nominale, à savoir ici les canaux cathodiques Ccl, Cc2, Cc3 et les canaux anodiques Cal, Ca3. Ainsi, les canaux de distribution dont la profondeur est nominale présentent une faible perte de charge locale, ce qui contribue à assurer un bon écoulement des gaz réactifs.

Cette configuration se traduit également par un renfort mécanique local de la plaque bipolaire dans la mesure où les parois latérales des canaux à profondeur nominale en contact avec la nervure opposée assurent ici la transmission des efforts mécaniques de serrage directement d'un assemblage membrane/électrodes d'une cellule à l'assemblage membrane/électrodes de la cellule voisine. A force de serrage constante, il y a donc une diminution des contraintes mécaniques subies par les tôles conductrices par rapport à la configuration de la figure 1 puisque, dans un plan (X,Y), quatre parois latérales transmettent localement l'effort de serrage au lieu de deux. De plus, la transmission des efforts mécaniques est améliorée dans la mesure où les efforts mécaniques sont directement transmis d'une paroi de fond d'une tôle conductrice à une nervure de séparation de la tôle conductrice opposée. Il est alors possible, à tenue mécanique équivalente, de diminuer l'épaisseur des tôles conductrices, par exemple de 75µm à 50µm, ce qui se traduit par une diminution de l'épaisseur totale de la plaque bipolaire et donc une augmentation de la compacité de l'empilement des cellules électrochimiques.

La figure 2B représente une section transversale de la plaque bipolaire 1 dans la deuxième zone dite à refroidissement privilégié. Cette deuxième zone fait suite à la première zone à distribution privilégiée suivant l'axe longitudinal des canaux de distribution et de refroidissement, dans la mesure où lesdites zones alternent longitudinalement.

Les canaux de refroidissement présentent ici une section d'écoulement cumulée supérieure à la valeur qu'elle présente dans la zone à distribution privilégiée illustrée sur la fig.2A. Pour cela, les canaux de distribution qui bordent chaque canal de refroidissement et dont la profondeur était nominale dans la zone amont à distribution privilégiée, présentent maintenant une portion à profondeur réduite de sorte que leur paroi de fond n'est plus en contact mécanique avec la nervure de séparation opposée. C'est le cas par exemple des canaux cathodiques Cc1 et Cc2 vis-à-vis du canal de refroidissement Cr1 qui présentent une portion Sc1, Sc2. De plus, le canal de distribution qui était superposé au canal de refroidissement et dont la profondeur était réduite dans la zone amont à distribution privilégiée illustrée sur la fig.2A, présente maintenant une portion à profondeur également réduite. C'est le cas du canal anodique Ca2 vis-à-vis du canal de refroidissement Cr1. Ainsi, le canal de refroidissement Cr1 présente une section d'écoulement supérieure à la valeur qu'il présentait dans la zone amont à distribution privilégiée illustrée sur la fig.2A. Cela se traduit par un écoulement amélioré du fluide caloporteur dans ce canal, ce qui améliore l'évacuation de la chaleur produite par les cellules électrochimiques en fonctionnement.

Dans cet exemple, les canaux de distribution anodiques et cathodiques présentent tous des portions à profondeur réduite, de sorte que les canaux de distribution ne sont pas en contact mécanique local avec une nervure de séparation opposée, et qu'une communication fluidique est assurée entre les canaux de refroidissement Cr1 et Cr2. Cela provient du fait que les canaux cathodiques Cc2, Cc3 et le canal anodique Ca3 présentent ici une profondeur réduite. Ainsi, la somme de la profondeur réduite d'un canal cathodique et de la profondeur réduite d'un canal anodique est inférieure à l'épaisseur de la plaque bipolaire, celle-ci étant définie comme la distance suivant l'axe Z entre deux plans parallèles, l'un passant par les nervures anodiques et l'autre passant par les nervures cathodiques. Les canaux de refroidissement Cr1, Cr2 communiquent donc entre eux, ce qui autorise un brassage transversal de l'écoulement du fluide caloporteur, et donc améliore l'homogénéité spatiale de l'évacuation de la chaleur produite.

Les premières et deuxièmes zones alternent longitudinalement, de sorte que les canaux de distribution et de refroidissement présentent des zones successives où l'écoulement des gaz réactifs et celui du fluide caloporteur sont tour à tour privilégiés. Cette alternance longitudinale entre les premières et deuxièmes zones est possible alors même que la plaque bipolaire présente une faible épaisseur.

La figure 2C représente une section transversale de la plaque bipolaire 1 dans la zone située en aval de la zone à refroidissement privilégié illustrée sur la fig.2B, cette zone étant une nouvelle zone dite à distribution privilégiée. Cette section est similaire à celle illustrée sur la fig.2A et s'en distingue essentiellement en ce qui concerne les canaux de refroidissement et des canaux anodiques de distribution.

Les canaux cathodiques Ccl, Cc2, Cc3 de distribution présentent de nouveau une portion Dcl, Dc2, Dc3 à profondeur nominale, et sont ici en contact mécanique, au niveau de leur paroi de fond, avec les nervures de séparation anodiques Na2, Na3, Na4 opposées.

Les canaux anodiques de distribution présentent une portion à profondeur nominale pour certains d'entre eux et une portion à profondeur réduite inférieure à la profondeur nominale pour d'autres. Plus précisément, les canaux anodiques qui présentaient une portion à profondeur nominale, resp. réduite, dans la zone à distribution privilégiée précédente (fig.2A) présentent maintenant une portion à profondeur réduite, resp. nominale. Ainsi, les canaux Ca1 et Ca3 présentent maintenant une portion Sa1, Sa3 à profondeur réduite, et les canaux Ca2 et Ca4 présentent maintenant une portion Da2, Da4 à profondeur nominale. Ainsi, chaque canal Ca de distribution anodique alterne longitudinalement entre une portion Da à profondeur nominale et une portion Sa à profondeur réduite, d'une zone à distribution privilégiée à l'autre.

Les canaux de refroidissement sont toujours situés entre deux portions cathodiques à profondeur nominale, et sont superposés aux portions anodiques à profondeur réduite. Ainsi, le canal de refroidissement Cr2 est maintenant superposé à la portion Sa3 du canal anodique Ca3 et est bordé transversalement par les portions Dc2, Dc3 des canaux cathodiques Cc2 et Cc3. Il est donc délimité suivant l'axe Z par la paroi de fond du canal anodique Ca3 et par la nervure cathodique opposée Nc3, et suivant l'axe Y par les parois latérales des canaux cathodiques Cc2 et Cc3.

Cette configuration à distribution privilégiée contribue à assurer un bon écoulement des gaz réactifs, ainsi qu'un renfort mécanique amélioré. De plus, le fait que les canaux de refroidissement ne soient pas en regard aux mêmes canaux de distribution d'une zone à distribution privilégiée à l'autre permet d'augmenter l'homogénéité de la distribution des gaz réactifs ainsi que de l'évacuation de la chaleur produite par les cellules électrochimiques en fonctionnement.

D'une manière générale, chaque canal de distribution, que ce soit au niveau de la tôle anodique comme de la tôle cathodique, peut présenter une portion à profondeur réduite dont la valeur peut être différente ou identique à celle des autres portions à profondeur réduite. A titre d'exemple, les portions anodiques à profondeur réduite peuvent présenter une valeur de profondeur inférieure à celle que présentent les portions cathodiques à profondeur réduite.

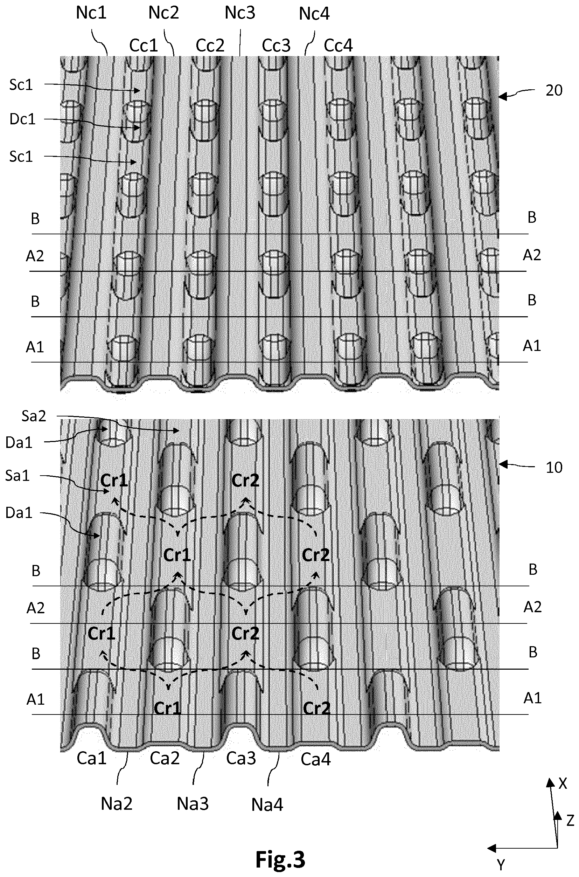

La figure 3 est une vue en perspective et en éclaté d'une partie de plaque bipolaire 1 selon le mode de réalisation illustré sur les figures 2A à 2C. La tôle cathodique 20 est située au-dessus, suivant l'axe Z, de la tôle anodique 10. Par ailleurs, des plans transversaux A1-A1 et A2-A2 sont situés dans des zones à distribution privilégiée telles qu'illustrées sur les fig.2A et 2C, et les plans transversaux B-B sont situés dans des zones à refroidissement privilégié telles qu'illustrées sur la fig.2B.

La tôle conductrice cathodique 20 comporte des canaux de distribution Ccl, Cc2, Cc3 qui s'étendent de manière parallèle entre eux et ici sensiblement rectiligne. Chaque canal cathodique, par exemple le canal Ccl, alterne longitudinalement entre une portion Dc1 à profondeur nominale et une portion Sc1 à profondeur réduite. Les portions à profondeur nominale, resp. réduite, des différents canaux Cc de distribution cathodiques sont disposées ici de manière adjacente les unes aux autres, suivant l'axe Y. Ainsi, dans les plans A1-A1 et A2-A2, les canaux cathodiques Cc présentent des portions Dc à profondeur nominale alors que dans les plans B-B, ils présentent des portions Sc à profondeur réduite.

La tôle conductrice anodique 10 comporte des canaux de distribution Cal, Ca2, Ca3 qui s'étendent de manière parallèle entre eux et ici sensiblement rectiligne. Chaque canal anodique, par exemple le canal Cal, alterne longitudinalement entre une portion Da1 à profondeur nominale et une portion Sa1 à profondeur réduite. A la différence des canaux cathodiques, au moins une portion Da1 à profondeur nominale d'un canal anodique Ca1 est disposée de manière adjacente suivant l'axe Y à une portion Sa2 à profondeur réduite d'un canal anodique Ca2 voisin. Dans cet exemple, chaque portion Da à profondeur nominale est adjacente, suivant l'axe Y, à deux portions Sa à profondeur réduite.

Cette alternance longitudinale entre des portions Da à profondeur nominale et des portions Sa à profondeur réduite pour les canaux anodiques Ca se traduit par une ondulation transversale, c'est-à-dire un décalage transversal local, des canaux de refroidissement Cr. Ainsi, les canaux de refroidissement Cr1, Cr2 ondulent transversalement suivant leur axe longitudinal, et viennent ainsi alternativement en regard des canaux anodiques Ca1 puis Ca2 pour le canal Cr1, et en regard des canaux anodiques Ca3 puis Ca4 pour le canal Cr2.

De plus, dans les zones à refroidissement privilégié telles que situées dans les plans transversaux B-B et illustrées sur la fig.2, les canaux de refroidissement Cr1 et Cr2 communiquent entre eux, ce qui autorise un brassage du fluide caloporteur, améliorant ainsi l'homogénéité de l'évacuation de chaleur.

Chaque canal de distribution d'une tôle conductrice est en regard d'une nervure de séparation de la tôle conductrice opposée, ce qui permet de diminuer sensiblement l'épaisseur de la plaque bipolaire.

Dans cet exemple, les portions à profondeur nominale ont leur paroi de fond de canal en contact avec la nervure de séparation opposée, ce qui assure un renfort mécanique de la plaque bipolaire.

Par ailleurs, l'alternance longitudinale entre les zones à distribution privilégiée et les zones à refroidissement privilégié permet de maintenir un bon écoulement à la fois des gaz réactifs et du fluide caloporteur.

De plus, le fait que chaque canal cathodique de distribution présente une portion à profondeur nominale dans les zones à distribution privilégiée est particulièrement avantageux lorsque le gaz réactif distribué est de l'oxygène contenu dans de l'air.

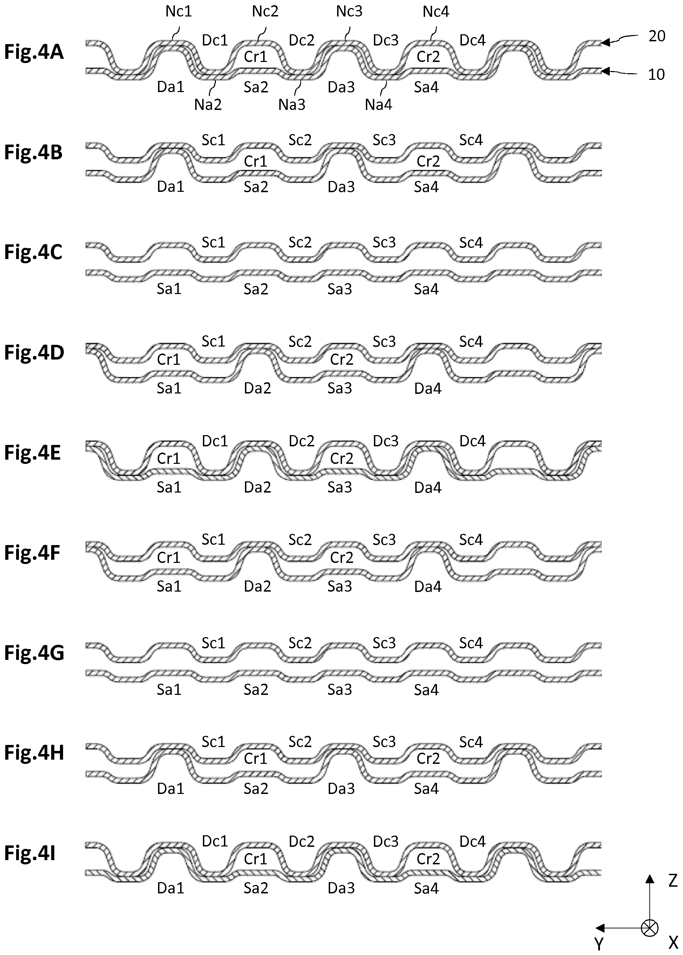

Les figures 4A à 4I sont plusieurs vues en coupe transversale de la plaque bipolaire représentée sur la figure 3, illustrant une alternance longitudinale entre les zones à distribution privilégiée et les zones à refroidissement privilégié.

La figure 4A représente une première zone à distribution privilégiée identique à celle illustrée schématiquement sur la fig.2A ainsi qu'à celle de la section transversale Al-A1 de la fig.3. Les canaux cathodiques présentent ici une portion Dc à profondeur nominale, et sont ici en contact mécanique avec les nervures de séparation anodiques Na. Les canaux anodiques présentent des portions Dal, Da3 à profondeur nominale, ici en contact mécanique avec les nervures cathodiques opposées Nc1, Nc3, et des portions Sa2, Sa4 à profondeur réduite de sorte que les canaux de refroidissement Cr1 et Cr2 sont superposés suivant l'axe Z à ces portions Sa2, Sa4 anodiques, et sont situés entre ces dernières et les nervures cathodiques Nc2, Nc4 opposées.

La figure 4B représente une zone intermédiaire entre la zone amont à distribution privilégiée de la fig.4A et la zone aval à refroidissement privilégié de la fig.4C. De manière à élargir les canaux de refroidissement Cr1, Cr2 tout en assurant un contact mécanique entre les tôles conductrices, les canaux cathodiques qui bordent chaque canal de refroidissement présentent maintenant une portion à profondeur réduite et ne sont donc plus en contact mécanique avec la nervure anodique opposée. Ainsi, les portions cathodiques Sc1, Sc2 qui bordent le canal Cr1 sont à profondeur réduite. Le contact mécanique entre les tôles conductrices est assuré ici par les portions anodiques Dal, Da3 à profondeur nominale.

La figure 4C représente une zone à refroidissement privilégié identique à celle illustrée schématiquement sur la fig.2B ainsi qu'à celle de la section transversale B-B de la fig.3. Les canaux anodiques et cathodiques présentent tous des portions Sa, Sc à profondeur réduite de sorte que les canaux de refroidissement Cr1, Cr2 sont en communication fluidique mutuelle. Un brassage du fluide caloporteur est alors autorisé, et la perte de charge locale dans les canaux de refroidissement est sensiblement diminuée. L'écoulement du fluide caloporteur est alors amélioré ainsi que l'évacuation de la chaleur produite. Dans cet exemple, le contact mécanique n'est plus assuré entre les deux tôles conductrices 10, 20, de sorte qu'il y a communication fluidique entre tous les canaux de refroidissement.

La figure 4D représente une zone intermédiaire entre la zone amont à refroidissement privilégiée de la fig.4C et la zone aval à distribution privilégiée de la fig.4E. Les canaux cathodiques présentent une portion Sc à profondeur réduite et les canaux anodiques qui présentaient une portion Sa à profondeur réduite dans la zone amont à distribution privilégiée (fig.4A) présentent maintenant une portion Da à profondeur nominale, ici de sorte qu'un contact mécanique soit assuré entre les tôles conductrices. Les canaux de refroidissement Cr1, Cr2 sont alors positionnés en regard des portions anodiques Sa1, Sa3 à profondeur réduite.

La figure 4E représente une deuxième zone à distribution privilégiée identique à celle illustrée schématiquement sur la fig.2C ainsi qu'à celle de la section transversale A2-A2 de la fig.3. Les canaux cathodiques présentent une portion Dc à profondeur nominale et sont ici en contact avec les nervures anodiques Na opposées. Les portions anodiques Da2, Da4 sont ici à profondeur nominale et sont en contact avec les nervures cathodiques Nc2, Nc4 opposées. Les portions anodiques Sa1, Sa3 sont ici à profondeur réduite de sorte que les canaux de refroidissement Cr1, Cr2 leur sont superposés. Cette configuration assure une distribution optimale des gaz réactifs.

Les figures 4G et 4I représentent respectivement une zone aval à refroidissement privilégié, identique à celle de la fig.4C, et une zone aval à distribution privilégiée, identique à celle de la fig.4A. Elles sont séparées par des zones intermédiaires similaires à celles décrites en référence aux fig.4B et 4D. Ces différentes zones ne sont donc pas décrites à nouveau en détail.

Différentes variantes et modifications du mode de réalisation décrit précédemment apparaîtront à l'homme du métier.

Ainsi, les canaux de distribution peuvent s'étendre longitudinalement de manière rectiligne ou en présentant des ondulations, ou décalages transversaux, dans le plan (X,Y) de la plaque bipolaire.

De plus, les canaux de distribution peuvent présenter plusieurs zones où la profondeur nominale et/ou la profondeur réduite diffèrent entre elles, notamment entre l'entrée et la sortie des canaux de distribution.

Par ailleurs, les canaux de distribution peuvent s'étendre longitudinalement et présenter au moins une zone dans laquelle ils sont agencés mutuellement comme illustré sur la figure 1, c'est-à-dire où les canaux de distribution anodiques sont superposés aux canaux de distribution cathodiques, et au moins une zone dans laquelle ils sont agencés mutuellement selon l'un ou l'autre des modes de réalisation de l'invention décrits précédemment, c'est-à-dire où chaque canal de distribution est situé en regard d'une nervure de séparation de la tôle conductrice opposée et où des portions de différentes profondeurs sont agencées de manière à former une alternance longitudinale.

Les portions à profondeur nominale de canaux de distribution sont avantageusement en contact mécanique avec les nervures de séparation opposées. De manière alternative, la profondeur nominale peut présenter une valeur telle que le contact mécanique n'est pas assuré soit pour les canaux anodiques, soit pour les canaux cathodiques. Un canal de refroidissement peut alors être présent entre la paroi de fond du canal à profondeur nominale et la nervure de séparation opposée.

On a décrit des canaux de refroidissement superposés à des canaux de distribution anodiques dans les zones à distribution privilégiée. En variante, ils peuvent être superposés aux canaux de distribution cathodiques.

On a décrit des canaux de refroidissement superposés à des canaux de distribution du même circuit de distribution dans les zones à distribution privilégiée, à savoir ici certains canaux anodiques. En variante, un ou plusieurs canaux de refroidissement peuvent en outre être superposés à des canaux de distribution de la tôle conductrice opposée.

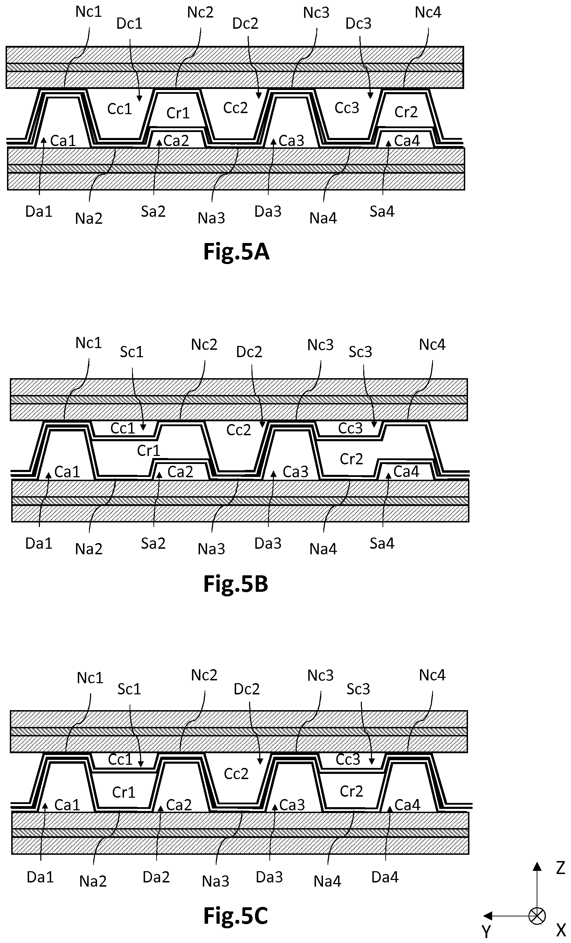

Ainsi, à titre illustratif, les figures 5A à 5C sont des vues schématiques en coupe transversale de deux zones successives à distribution privilégiée (fig.5A et 5C), différentes l'une de l'autre, et séparées l'une de l'autre par une zone à refroidissement privilégié (fig.5B). La zone à distribution privilégiée illustrée sur la fig.5A est identique à celle décrite en référence à la fig.2A et n'est pas détaillée à nouveau. La zone à distribution privilégiée illustrée sur la fig.5C est située en aval de la zone de la fig.5A, et s'en distingue essentiellement en ce que le canal de refroidissement Cr1, qui était, précédemment superposé au canal anodique Ca2 et bordé des canaux cathodiques Cc1 et Cc2, est maintenant superposé au canal cathodique Cc1 et bordé des canaux anodiques Ca1 et Ca2. Ainsi, certains canaux anodiques, tels que les canaux Ca1 et Ca3, présentent des portions Dal, Da3 à profondeur nominale dans deux zones à distribution privilégiée successives. Seuls ici les canaux anodiques Ca2 et Ca4 alternent entre des portions Da2, Da4 à profondeur nominale et des portions Sa2, Sa4 à profondeur réduite.

Par ailleurs, comme l'illustre la fig.5B, les canaux de refroidissement Cr1, Cr2 peuvent ne pas être en communication fluidique dans les zones à refroidissement privilégié. Dans cet exemple, les canaux Cr1 et Cr2 sont séparés transversalement par au moins un canal de distribution qui présente une portion à profondeur nominale avec contact mécanique avec la nervure de séparation opposée, comme c'est le cas ici des canaux Cc2 et Ca3.

Les différents modes de réalisation et variantes peuvent être combinés tout ou partie entre eux, et peuvent être appliqués au circuit de distribution anodique et/ou au circuit de distribution cathodique.

## Revendications

1. Plaque bipolaire (1), destinée à être disposée entre deux électrodes (3, 4) de cellules électrochimiques adjacentes, comportant une première et une deuxième tôles conductrices (10, 20) ayant chacune une face interne (12, 22) et une face externe (11, 21), les tôles conductrices (10, 20) étant accolées l'une à l'autre au niveau des faces internes (12, 22), et comportant chacune des reliefs délimitant au moins partiellement,
- au niveau des faces externes (11, 21), des canaux de distribution (Ca, Cc) destinés à distribuer des gaz réactifs, les canaux de distribution (Ca, Cc) d'une même tôle conductrice (10, 20) étant séparés deux à deux par une nervure de séparation (Na, Nc) destinée à être au contact de l'une desdites électrodes (3, 4), et
- au niveau des faces internes (12, 22), des canaux de refroidissement (Cr) destinés à permettre l'écoulement d'un fluide caloporteur ;
**caractérisée en ce que** chacun desdits canaux de distribution (Ca, Cc) est situé en regard d'une nervure de séparation (Nc, Na) de la tôle conductrice (10, 20) opposée ;
et **en ce que** lesdits canaux de distribution (Ca, Cc) comportent des portions (Sa, Da ; Sc, Dc) de différentes profondeurs agencées de manière à former une alternance longitudinale entre :
- une première zone, dite à distribution privilégiée, dans laquelle :
o les canaux de distribution (Ca, Cc) présentent une section transversale cumulée d'une première valeur dite valeur haute de distribution, et
o les canaux de refroidissement (Cr) présentent une section transversale cumulée d'une première valeur dite valeur basse de refroidissement ; et
- une deuxième zone, dite à refroidissement privilégié, dans laquelle :
o les canaux de distribution (Ca, Cc) présentent une section transversale cumulée d'une valeur inférieure à la valeur haute de distribution, et
o les canaux de refroidissement (Cr) présentent une section transversale cumulée d'une valeur supérieure à la valeur basse de refroidissement.

2. Plaque bipolaire (1) selon la revendication 1, dans laquelle des canaux de distribution (Ca, Cc) présentent, dans les zones à distribution privilégiée, une portion (Da, Dc) à profondeur dite nominale ; et, dans les zones à refroidissement privilégié, une portion (Sa, Sc) à profondeur dite réduite inférieure à la profondeur nominale.

3. Plaque bipolaire (1) selon la revendication 2, dans laquelle chaque canal de distribution (Ca, Cc) comporte une paroi de fond (14, 24) reliée aux nervures de séparation (Na, Nc) adjacentes, les portions (Da, Dc) à profondeur nominale étant en contact mécanique avec les nervures de séparation (Na, Nc) opposées par leur paroi de fond (14, 24).

4. Plaque bipolaire (1) selon l'une quelconque des revendications 1 à 3, dans laquelle, dans les zones à distribution privilégiée, des canaux de distribution (Ca1, Ca3 ; Cc) présentent une portion (Da1, Da3 ; Dc) à profondeur dite nominale, et d'autres canaux de distribution (Ca2, Ca4) présentent une portion (Sa2, Sa4) à profondeur dite réduite inférieure à la profondeur nominale.

5. Plaque bipolaire (1) selon la revendication 4, dans laquelle au moins un canal de refroidissement (Cr1 ; Cr2) s'étend, dans les zones à distribution privilégiée, entre la paroi de fond (14-2 ; 14-4) d'une portion (Sa2 ; Sa4) à profondeur réduite d'un canal de distribution (Ca2 ; Ca4) et une nervure de séparation (Nc2 ; Nc4) opposée.

6. Plaque bipolaire (1) selon la revendication 5, dans laquelle, dans les zones à distribution privilégiée, ledit canal de refroidissement (Cr1) est délimité transversalement par deux portions (Dc1, Dc2) à profondeur nominale de canaux de distribution (Cc1, Cc2) de la même tôle conductrice (20).

7. Plaque bipolaire (1) selon l'une quelconque des revendications 1 à 6, dans laquelle un canal de distribution (Ca2, Ca4) présente une portion (Sa2, Sa4) à profondeur réduite dans une première zone à distribution privilégiée, et une portion (Da2, Da4) à profondeur nominale dans une deuxième zone à distribution privilégiée successive à la première zone.

8. Plaque bipolaire (1) selon l'une quelconque des revendications 1 à 7, dans laquelle les canaux de refroidissement (Cr1, Cr2) présentent, dans les zones à distribution privilégiée, une dimension transversale, dans le plan de la plaque bipolaire, d'une première valeur, et, dans les zones à refroidissement privilégié, une dimension transversale d'une valeur supérieure à ladite première valeur.

9. Plaque bipolaire (1) selon la revendication 8, dans laquelle, dans au moins une zone à refroidissement privilégié, les canaux de refroidissement (Cr1, Cr2) communiquent fluidiquement ensemble.

10. Plaque bipolaire (1) selon l'une quelconque des revendications 1 à 9, dans laquelle les canaux de distribution (Cc) d'une tôle conductrice (20) destinée à contacter une cathode (4) d'une cellule électrochimique présentent des portions (Dc) à profondeur nominale dans les zones à distribution privilégiée.

11. Cellule électrochimique, comportant :
- une plaque bipolaire (1) selon l'une quelconque des revendications précédentes ;
- un assemblage membrane/électrodes (2), dont l'une desdites électrodes (3, 4) est au contact de la première (10) ou la deuxième (20) tôle conductrice de la plaque bipolaire (1).

## Patentansprüche

1. Bipolare Platte (1), die dazu bestimmt ist, zwischen zwei Elektroden (3, 4) benachbarter elektrochemischer Zellen angeordnet zu sein, umfassend ein erstes und ein zweites leitendes Blech (10, 20), die jeweils eine Innenseite (12, 22) und eine Außenseite (11, 21) aufweisen, wobei die leitenden Bleche (10, 20) an den Innenseiten (12, 22) aneinandergefügt sind und jeweils Reliefs aufweisen, die zumindest teilweise:
- an den Außenseiten (11, 21) Verteilungskanäle (Ca, Cc) begrenzen, die dazu bestimmt sind, reaktive Gase zu verteilen, wobei die Verteilungskanäle (Ca, Cc) eines selben leitenden Blechs (10, 20) paarweise durch eine Trennungsrippe (Na, Nc) getrennt sind, die dazu bestimmt ist, mit einer der Elektroden (3, 4) in Kontakt zu stehen, und
- an den Innenseiten (12, 22) Kühlkanäle (Cr) begrenzen, die dazu bestimmt sind, das Strömen eines wärmeübertragenden Fluids zu gestatten;
**dadurch gekennzeichnet, dass** sich jeder der Verteilungskanäle (Ca, Cc) gegenüber einer Trennungsrippe (Nc, Na) des gegenüberliegenden leitenden Blechs (10, 20) befindet; und dadurch, dass die Verteilungskanäle (Ca, Cc) Abschnitte (Sa, Da; Sc, Dc) unterschiedlicher Tiefen umfassen, die derart angeordnet sind, dass sie zwischen den folgenden Bereichen einen Wechsel in Längsrichtung bilden:
- einem ersten Bereich mit privilegierter Verteilung, wobei:
o die Verteilungskanäle (Ca, Cc) einen kumulierten Querabschnitt eines ersten Werts, des hohen Verteilungswerts aufweisen, und
o die Verteilungskanäle (Cr) einen kumulierten Querabschnitt eines ersten Werts, des niedrigen Kühlungswerts, aufweisen; und
- einem zweiten Bereich mit privilegierter Kühlung, wobei:
o die Verteilungskanäle (Ca, Cc) einen kumulierten Querabschnitt eines Werts aufweisen, der niedriger als der hohe Verteilungswert ist, und
o die Verteilungskanäle (Cr) einen kumulierten Querabschnitt eines ersten Werts aufweisen, der höher als der niedrige Kühlungswert ist.

2. Bipolare Platte (1) nach Anspruch 1, wobei Verteilungskanäle (Ca, Cc) in den Bereichen mit privilegierter Verteilung einen Abschnitt (Da, Dc) mit einer Nenntiefe aufweisen; und in den Bereichen mit privilegierter Kühlung einen Abschnitt (Sa, Sc) mit verringerter Tiefe aufweisen, die geringer als die Nenntiefe ist.

3. Bipolare Platte (1) nach Anspruch 2, wobei jeder Verteilungskanal (Ca, Cc) eine Bodenwand (14, 24) umfasst, die mit den benachbarten Trennungsrippen (Na, Nc) verbunden ist, wobei die Abschnitte (Da, Dc) mit einer Nenntiefe mit den gegenüberliegenden Trennungsrippen (Na, Nc) durch ihre Bodenwand (14, 24) in mechanischem Kontakt stehen.

4. Bipolare Platte (1) nach einem der Ansprüche 1 bis 3, wobei in den Bereichen mit privilegierter Verteilung die Verteilungskanäle (Ca1, Ca3; Cc) einen Abschnitt (Da1, Da3; Dc) mit einer Nenntiefe umfassen und andere Verteilungskanäle (Ca2, Ca4) einen Abschnitt (Sa2 Sa4) mit verringerter Tiefe aufweisen, die geringer als die Nenntiefe ist.

5. Bipolare Platte (1) nach Anspruch 4, wobei sich mindestens ein Kühlkanal (Cr1; Cr2) in den Bereichen mit privilegierter Verteilung zwischen der Bodenwand (14 - 2; 14 - 4) eines Abschnitts (Sa2; Sa4) mit verringerter Tiefe eines Verteilungskanals (Ca2; Ca4) und einer gegenüberliegenden Trennungsrippe (Nc2; Nc₄) erstreckt.

6. Bipolare Platte (1) nach Anspruch 5, wobei in den Bereichen mit privilegierter Verteilung der Kühlkanal (Cr1) in Querrichtung von zwei Abschnitten (Dc1, Dc2) mit einer Nenntiefe von Verteilungskanälen (Cc1, Cc2) desselben leitenden Blechs (20) begrenzt wird.

7. Bipolare Platte (1) nach einem der Ansprüche 1 bis 6, wobei ein Verteilungskanal (Ca2, Ca4) einen Abschnitt (Sa2, Sa4) mit verringerter Tiefe in einem ersten Bereich mit privilegierter Verteilung und einen Abschnitt (Da2, Da4) mit einer Nenntiefe in einem zweiten Bereich mit privilegierter Verteilung, die auf den ersten Bereich folgt, aufweist.

8. Bipolare Platte (1) nach einem der Ansprüche 1 bis 7, wobei die Kühlkanäle (Cr1, Cr2) in den Bereichen mit privilegierter Verteilung in der Ebene der bipolaren Platte eine Querabmessung eines ersten Werts aufweisen, und in den Bereichen mit privilegierter Kühlung eine Querabmessung eines Werts, der höher als der erste Wert ist, aufweisen.

9. Bipolare Platte (1) nach Anspruch 8, wobei in mindestens einem Bereich mit privilegierter Kühlung die Kühlkanäle (Cr1, Cr2) miteinander in Fluidverbindung stehen.

10. Bipolare Platte (1) nach einem der Ansprüche 1 bis 9, wobei die Verteilungskanäle (Cc) eines leitenden Blechs (20), das dazu bestimmt ist, mit einer Kathode (4) einer elektrochemischen Zelle in Kontakt zu treten, in den Bereichen mit privilegierter Verteilung Abschnitte (Dc) mit einer Nenntiefe aufweisen.

11. Elektrochemische Zelle, umfassend:
- eine bipolare Platte (1) nach einem der vorhergehenden Ansprüche;
- eine Membran/Elektroden-Anordnung (2), wovon eine der Elektroden (3, 4) mit dem ersten (10) oder dem zweiten (20) leitenden Blech der bipolaren Platte 91) in Kontakt steht.

## Claims

1. Bipolar plate (1), intended to be positioned between two electrodes (3, 4) of adjacent electrochemical cells, including a first conductive sheet and a second conductive sheet (10, 20) each having an inner face (12, 22) and an outer face (11, 21), the conductive sheets (10, 20) being bonded to one another by the inner faces (12, 22), and each including reliefs at least partially delimiting,
- on the outer faces (11, 21), distribution channels (Ca, Cc) that are intended to distribute reactive gases, the distribution channels (Ca, Cc) of one and the same conductive sheet (10, 20) being separated pairwise by a dividing rib (Na, Nc) intended to make contact with one of said electrodes (3, 4), and
- on the inner faces (12, 22), cooling channels (Cr) that are intended to allow the flow of a heat-transfer fluid;
**characterized in that** each of said distribution channels (Ca, Cc) is located facing a dividing rib (Nc, Na) of the opposite conductive sheet (10, 20);
and **in that** said distribution channels (Ca, Cc) include portions of various depths (Sa, Da; Sc, Dc) that are arranged so as to form a longitudinal alternation between:
- a first zone, referred to as an enhanced distribution zone, in which:
o the distribution channels (Ca, Cc) have a combined cross section of a first value, referred to as a high distribution value, and
o the cooling channels (Cr) have a combined cross section of a first value, referred to as a low cooling value; and
- a second zone, referred to as an enhanced cooling zone, in which:
o the distribution channels (Ca, Cc) have a combined cross section of a value that is lower than the high distribution value, and
o the cooling channels (Cr) have a combined cross section of a value that is higher than the low cooling value.

2. Bipolar plate (1) according to Claim 1, in which the distribution channels (Ca, Cc) have, in the enhanced distribution zones, a portion (Da, Dc) the depth of which is referred to as the nominal depth; and, in the enhanced cooling zones, a portion (Sa, Sc) the depth of which, referred to as the decreased depth, is less than the nominal depth.

3. Bipolar plate (1) according to Claim 2, in which each distribution channel (Ca, Cc) includes a back wall (14, 24) connected to the adjacent dividing ribs (Na, Nc), the portions (Da, Dc) of nominal depth making mechanical contact with the opposite dividing ribs (Na, Nc) via their back wall (14, 24).

4. Bipolar plate (1) according to any one of Claims 1 to 3, in which, in the enhanced distribution zones, some distribution channels (Ca1, Ca3; Cc) have a portion (Da1, Da3; Dc) the depth of which is referred to as the nominal depth, and other distribution channels (Ca2, Ca4) have a portion (Sa2, Sa4) the depth of which, referred to as the decreased depth, is less than the nominal depth.

5. Bipolar plate (1) according to Claim 4, in which at least one cooling channel (Cr1; Cr2) extends, in the enhanced distribution zones, between the back wall (14-2; 14-4) of a portion (Sa2; Sa4) of decreased depth of a distribution channel (Ca2; Ca4) and an opposite dividing rib (Nc2; Nc4).

6. Bipolar plate (1) according to Claim 5, in which, in the enhanced distribution zones, said cooling channel (Cr1) is transversally delimited by two portions (Dc1, Dc2) of nominal depth of distribution channels (Cc1, Cc2) of the same conductive sheet (20).

7. Bipolar plate (1) according to any one of Claims 1 to 6, in which a distribution channel (Ca2, Ca4) has a portion (Sa2, Sa4) of decreased depth in a first enhanced distribution zone, and a portion (Da2, Da4) of nominal depth in a second enhanced distribution zone that is successive to the first zone.

8. Bipolar plate (1) according to any one of Claims 1 to 7, in which the cooling channels (Cr1, Cr2) have, in the enhanced distribution zones, a transverse dimension, in the plane of the bipolar plate, of a first value and, in the enhanced cooling zones, a transverse dimension of a value that is higher than said first value.

9. Bipolar plate (1) according to Claim 8, in which, in at least one enhanced cooling zone, there is a communication of fluid between all of the cooling channels (Cr1, Cr2).

10. Bipolar plate (1) according to any one of Claims 1 to 9, in which the distribution channels (Cc) of a conductive sheet (20) that is intended to make contact with a cathode (4) of an electrochemical cell have portions (Dc) of nominal depth in the enhanced distribution zones.

11. Electrochemical cell, including:
- a bipolar plate (1) according to any one of the preceding claims;
- a membrane/electrode assembly (2), one of said electrodes (3, 4) of which is in contact with the first (10) or the second (20) conductive sheet of the bipolar plate (1).
